# EUROPÄISCHE PATENTSCHRIFT

(11) **EP 3 318 441 B1**
(45) Veröffentlichungstag und Bekanntmachung des Hinweises auf die Patenterteilung: **12.06.2024**
(21) Anmeldenummer: 17195507.3
(22) Anmeldetag: 09.10.2017
(51) Int. Cl.: B60K 35/00, B60W 50/14

(54) **VORRICHTUNG ZUR UNTERSTÜTZUNG EINES FAHRERS EINES FAHRZEUGS MIT EINER PROJEKTIONSEINRICHTUNG**
DEVICE FOR SUPPORTING A DRIVER OF A VEHICLE WITH A PROJECTION DEVICE
DISPOSITIF D'AIDE À LA CONDUITE D'UN VÉHICULE POURVU D'UN DISPOSITIF DE PROJECTION

(30) Priorität: 15.10.2016 DE 102016012313
(43) Veröffentlichungstag der Anmeldung: 09.05.2018
(73) Patentinhaber: MAN Truck & Bus SE, 80995 München (DE)
(72) Erfinder: Jung, Marcel, 82377 Penzberg (DE)
(74) Vertreter: Liebl, Thomas

(56) Entgegenhaltungen:
- EP-A1- 1 677 272
- WO-A1-2013/113500
- DE-A1-102006 027 679
- DE-A1-102013 021 587
- DE-A1-102013 222 467
- DE-A1-102014 211 161

## Beschreibung

Die Erfindung betrifft eine Vorrichtung zur Unterstützung eines Fahrers eines Fahrzeugs nach dem Oberbegriff des Patentanspruchs 1, ein Verfahren zur Unterstützung eines Fahrers eines Fahrzeugs nach dem Oberbegriff des Patentanspruchs 12 sowie ein Fahrzeug, insbesondere ein Nutzfahrzeug, nach Patentanspruch 13.

Es ist bekannt, an einem Fahrzeug eine Projektionseinrichtung, beispielsweise ein Head-up-Display, vorzusehen, mittels der in Fahrtrichtung vor dem Fahrzeug befindliche Fahrbahnmarkierungen, beispielsweise eine Fahrbahn-Leitlinie, als Projektionsobjekte in ein vorderes Sichtfeld des Fahrers projiziert werden können. Durch diese Projektion können die vor dem Fahrzeug befindlichen natürlichen Fahrbahnmarkierungen für den Fahrer des Fahrzeugs optisch hervorgehoben bzw. verdeutlicht werden.

Aus der DE 10 2007 016 868 A1 ist beispielsweise ein Verfahren zur Anzeige eines Fahrbahnverlaufs vor einem Fahrzeug bekannt, bei dem zunächst eine aktuelle Geschwindigkeit des Fahrzeugs und vor dem Fahrzeug liegende Punkte einer Fahrzeugumgebung bestimmt werden. Über die Fahrzeuggeschwindigkeit wird dann ein optischer Fluss dieser Punkte ermittelt. Zur Darstellung dieses Fluss und somit auch des Fahrbahnverlaufs werden dann Symbole in die Head-up-Anzeige eingeblendet. In einer bevorzugten Ausgestaltung dieses Verfahrens werden zudem der optische Fluss einer mittleren Fahrbahnmarkierung bzw. einer Fahrbahn-Leitlinie ermittelt und Symbole zur Darstellung dieser Fahrbahnmarkierung in die Head-up-Anzeige eingeblendet.

Des Weiteren ist es problematisch, dass Fahrbahnmarkierungen für einen Fahrer eines Fahrzeugs bei schlechten Sichtverhältnissen häufig nur schwierig zu erkennen sind. Die schlechten Sichtverhältnisse für den Fahrer können beispielsweise durch Regen, durch aufgewirbelte Wassertropfen bzw. Spray von vorausfahrenden Fahrzeugen bei nasser Fahrbahn, durch Lichtspiegelungen bei nasser Fahrbahn, durch Nebel oder aber auch durch Schnee bei nicht geräumter Fahrbahn verursacht werden.

Aus der DE 10 2013 021 587 A1 ist eine gattungsgemäße Vorrichtung für ein Fahrzeug zur Erzeugung einer Fahrspurbegrenzung bekannt. Aus der WO 2013/113500 A ist ein Fahrerassistenzsystem zur virtuellen Darstellung eines Straßenverlaufes bei schlechten Sichtverhältnissen bekannt. Aus der DE 10 2006 027 679 A ist ein Fahrunterstützungssystem für ein Fahrzeug bekannt.

Aufgabe der Erfindung ist es daher, eine Vorrichtung und ein Verfahren zur Unterstützung eines Fahrers eines Fahrzeugs, insbesondere eines Nutzfahrzeugs, bereitzustellen, mittels denen die Erkennung der Fahrbahnmarkierungen bei schlechten Sichtverhältnissen für den Fahrer des Fahrzeugs zuverlässig und komfortabel erleichtert wird.

Diese Aufgabe wird gelöst mit den Merkmalen der unabhängigen Patentansprüche. Bevorzugte Weiterbildungen sind in den abhängigen Ansprüchen offenbart.

Erfindungsgemäß wird eine Vorrichtung zur Unterstützung eines Fahrers eines Fahrzeugs, insbesondere eines Nutzfahrzeugs, vorgeschlagen, wobei eine, insbesondere fahrzeugseitig angeordnete, Fahrbahnmarkierung-Erfassungseinrichtung vorgesehen ist, mittels der zumindest ein Teil von in Fahrtrichtung vor dem Fahrzeug befindlichen Fahrbahnmarkierungen erfasst werden kann, und wobei das Fahrzeug eine Projektionseinrichtung aufweist, mittels der die wenigstens eine erfasste Fahrbahnmarkierung als Projektionsobjekt in ein, insbesondere in Fahrtrichtung vorderes, Sichtfeld des Fahrers projiziert werden kann, so dass die vor dem Fahrzeug befindliche, erfasste Fahrbahnmarkierung mittels des Projektionsobjekts für den Fahrer optisch hervorgehoben ist. Erfindungsgemäß weist das Fahrzeug eine Sicht-Erfassungseinrichtung auf, mittels der die aktuellen Sichtverhältnisse für den Fahrer des Fahrzeugs erfasst bzw. ermittelt werden können. Mittels eines signaltechnisch mit der Sicht-Erfassungseinrichtung verbundenen Steuergeräts der Projektionseinrichtung wird dabei die Projektion der wenigstens einen Fahrbahnmarkierung ins Sichtfeld des Fahrers in Abhängigkeit von den mittels der Sicht-Erfassungseinrichtung erfassten aktuellen Sichtverhältnissen für den Fahrer selbsttätig bzw. automatisch aktiviert, insbesondere selbsttätig aktiviert und deaktiviert.

Auf diese Weise wird die Erkennung der Fahrbahnmarkierung bei schlechten Sichtverhältnissen für den Fahrer deutlich erleichtert, da nun die Projektion der wenigstens einen Fahrbahnmarkierung ins Sichtfeld des Fahrers beispielsweise immer dann selbsttätig bzw. automatisch mittels des Steuergeräts aktiviert werden kann, wenn schlechte Sichtverhältnisse für den Fahrer des Fahrzeugs vorliegen. Dadurch kann der Fahrer die Fahrbahnmarkierungen bei jedem Wetter und bei jeder Fahrbahnbeschaffenheit sehen und sicher sowie rechtzeitig auf diese reagieren.

Die Begrifflichkeit "Sichtverhältnisse" ist hier dabei bevorzugt in einem weiten Sinne zu verstehen. So können die Sichtverhältnisse hier bevorzugt nicht nur Sichtbehinderungen durch Regen oder Nebel, sondern auch Sichtbehinderungen durch Fahrbahnmarkierungen verdeckende Stoffe, wie beispielsweise Schnee, Erde oder Streugut, umfassen.

Des Weiteren müssen die Projektionsobjekte die ihnen zugrundeliegenden natürlichen Fahrbahnmarkierungen nicht exakt nachbilden. So können die Projektionsobjekte beispielsweise eine andere Farbe oder andere äußere Abmessungen aufweisen, wie die ihnen zugrundeliegenden natürlichen Fahrbahnmarkierungen. Wesentlich dabei ist, dass die vor dem Fahrzeug befindlichen erfassten Fahrbahnmarkierungen mittels der Projektionsobjekte für den Fahrer optisch hervorgehoben werden, so dass der Fahrer diese Fahrbahnmarkierungen, insbesondere auch die Art der Fahrbahnmarkierungen, erkennen kann.

In einer bevorzugten konkreten Ausgestaltung weist die Sicht-Erfassungseinrichtung einen Regensensor auf. Mittels eines derartigen Regensensors können die Sichtverhältnisse für den Fahrer des Fahrzeugs einfach und effektiv erfasst werden. Weiter bevorzugt weist die Sicht-Erfassungseinrichtung einen Lichtsensor zur Erfassung der Lichtverhältnisse in der Fahrzeugumgebung, insbesondere zur Erfassung der Helligkeit der Fahrzeugumgebung auf. Dadurch können die Sichtverhältnisse für den Fahrer ebenfalls effektiv erfasst werden. Vorteilhaft weist die die Sicht-Erfassungseinrichtung weiter einen Beschleunigungssensor auf, mittels dem die Beschleunigung des Fahrzeugs in Fahrzeug-Hochrichtung gemessen werden kann. Mittels eines derartigen Beschleunigungssensors können beispielsweise Unebenheiten durch Ablagerungen auf der Fahrbahn, beispielsweise durch Schnee, Erde oder Streugut, erkannt bzw. erfasst werden.

Erfindungsgemäß wird mittels der Sicht-Erfassungseinrichtung die Aktivierung wenigstens eines Fahrzeuglichts, insbesondere die Aktivierung eines Abblendlichts, eines Fernlichts, und/oder eines Nebellichts des Fahrzeugs, erfasst.

So können die Sichtverhältnisse für den Fahrer des Fahrzeugs besonders einfach und gleichzeitig auch zuverlässig erfasst werden. Das Nebellicht kann dabei beispielsweise von wenigstens einem Nebelscheinwerfer oder von einer Nebelschlussleuchte ausgegeben werden.

In einer weiteren bevorzugten Ausgestaltung ist zusätzlich eine durch den Fahrer, insbesondere manuell, betätigbare Betätigungseinrichtung, insbesondere eine Taste und/oder einen Schalter, vorgesehen, durch deren Betätigung die Projektion der wenigstens einen Fahrbahnmarkierung ins Sichtfeld des Fahrers aktiviert, insbesondere aktiviert und deaktiviert, werden kann.

Dadurch kann der Fahrer die Projektion der wenigstens einen Fahrbahnmarkierung auch selbst aktivieren, wenn er dies wünscht.

Bevorzugt ist die Betätigungseinrichtung dabei nur mit einer Funktion zur Aktivierung der Fahrbahnmarkierungs-Projektion und mit einer Funktion zur Deaktivierung der Fahrbahnmarkierungs-Projektion belegt. Mittels einer derartigen, speziell zur Aktivierung und Deaktivierung der Fahrbahnmarkierungs-Projektion vorgesehenen Betätigungseinrichtung kann der Fahrer die Fahrbahnmarkierungs-Projektion schnell und komfortabel aktivieren bzw. deaktivieren, wenn er dies für erforderlich hält. Weiter bevorzugt ist die Betätigungseinrichtung in unmittelbarer Umgebung eines Lichtschalters des Fahrzeugs zur Aktivierung wenigstens eines Fahrzeuglichts, insbesondere eines Abblendlichts, eines Fernlichts, und/oder eines Nebellichts des Fahrzeugs, an dem Fahrzeug angeordnet. So kann der Fahrer die Betätigungseinrichtung schnell und einfach auffinden, wenn er seine Sicht auf die Fahrbahnmarkierungen verbessern will.

In einer bevorzugten konkreten Ausgestaltung weist die Fahrbahnmarkierung-Erfassungseinrichtung eine Sensorik auf, mittels der die Art der vor dem Fahrzeug befindlichen Fahrbahnmarkierung und/oder die Position der vor dem Fahrzeug befindlichen Fahrbahnmarkierung relativ zu dem Fahrzeug, insbesondere durch Vermessung der Fahrbahnmarkierungen, ermittelt werden kann. Mittels einer derartigen Sensorik können die vor dem Fahrzeug befindlichen Fahrbahnmarkierungen effektiv und zuverlässig erfasst werden. Die Sensorik kann dabei beispielsweise durch wenigstens einen Infrarotsensor gebildet sein. Bevorzugt ist es dabei, wenn die Sensorik auch von anderen Fahrzeugsystemen, insbesondere Fahrerassistenzsystemen, genutzt wird.

Alternativ oder zusätzlich zu dieser Sensorik kann wenigstens eine datenübertragend mit der fahrzeugseitigen Fahrbahnmarkierung-Erfassungseinrichtung verbundene bzw. verbindbare Informationseinrichtung über Informationen zu auf der Fahrstrecke des Fahrzeugs befindlichen Fahrbahnmarkierungen verfügen. Dabei ist dann eine ebenfalls datenübertragend mit der Fahrbahnmarkierung-Erfassungseinrichtung verbundene, insbesondere fahrzeugseitige, Positionsbestimmungseinrichtung vorgesehen, mittels der die aktuelle Position des Fahrzeugs auf seiner Fahrstrecke ermittelt werden kann. Mittels der Fahrbahn-Erfassungseinrichtung kann dann aus den Informationen der Informationseinrichtung und der ermittelten aktuellen Position des Fahrzeugs die Art der wenigstens einen vor dem Fahrzeug befindlichen Fahrbahnmarkierung und/oder die Position der wenigstens einen vor dem Fahrzeug befindlichen Fahrbahnmarkierung relativ zu dem Fahrzeug ermittelt werden. Auf diese Weise können die vor dem Fahrzeug befindlichen Fahrbahnmarkierungen ebenfalls effektiv erfasst werden. Bevorzugt ist die Fahrbahnmarkierung-Erfassungseinrichtung dabei auch datenübertragend mit einer Routenermittlungseinrichtung des Fahrzeugs verbunden, mittels der die Fahrroute des Fahrzeugs ermittelt werden kann. Mit den Informationen zu der Fahrroute des Fahrzeugs wird die Erfassung der vor dem Fahrzeug befindlichen Fahrbahnmarkeirungen deutlich vereinfacht. Die Fahrroute kann dabei beispielsweise durch den Fahrer des Fahrzeugs in eine Eingabeeinrichtung der Routenermittlungseinrichtung eingegeben werden.

In einer bevorzugten konkreten Ausgestaltung ist die Informationseinrichtung durch eine fahrzeugseitige Speichereinrichtung gebildet, in der Informationen zu auf der Fahrstrecke des Fahrzeugs befindlichen Fahrbahnmarkierungen gespeichert sind. So können die Informationen zu den auf der Fahrstrecke des Fahrzeugs befindlichen Fahrbahnmarkierungen besonders einfach an die Fahrbahnmarkierung-Erfassungseinrichtung übermittelt werden. Bevorzugt ist dabei vorgesehen, dass die Informationen zu auf der Fahrstrecke des Fahrzeugs befindlichen Fahrbahnmarkierungen mittels der Fahrbahnmarkierung-Erfassungseinrichtung aus Kartendaten eines fahrzeugseitigen Navigationssystem als Speichereinrichtung ausgelesen und/oder ermittelt werden können.

Alternativ oder zusätzlich kann die Informationseinrichtung auch durch eine fahrzeugexterne Speichereinrichtung, insbesondere durch einen fahrzeugexternen Cloud-Server und/oder durch einen einer Lichtsignalanlage zugeordneten stationären Speicher, gebildet sein, in der Informationen zu auf der Fahrstrecke des Fahrzeugs befindlichen Fahrbahnmarkierungen gespeichert sind. Weiter alternativ oder zusätzlich kann die Informationseinrichtung durch wenigstens ein anderes, insbesondere durch ein vorausfahrendes, Fahrzeug gebildet sein. Dadurch kann beispielsweise bei einer verunreinigten Fahrbahn ein vorausfahrendes Fahrzeug, welches zuletzt eine saubere Fahrbahn erfasst hat, seine, beispielsweise mittels einer fahrzeugseitigen Sensorik, erfassten Daten an nachkommende Fahrzeuge mittels Car-to-Car-Kommunikation übermitteln.

Grundsätzlich können die erfassbaren und projizierbaren Fahrbahnmarkierungen beispielsweise durch durchgängige, unterbrochene, mit einfachem oder mit doppeltem Strich ausgebildete Längsmarkierungslinien, durch Schrägstrichgatter, Radfahrerfurt, Grenzmarkierungen, Schriftzug, Piktogramme (verzerrt und unverzerrt), oder durch farbige Baustellenmarkierungen gebildet sein. Bevorzugt ist es dabei, dass die erfassbaren und projizierbaren Fahrbahnmarkierungen zumindest durch Längsmarkierungslinien gebildet sind. Bevorzugt sind diese projizierbaren Längsmarkierungslinien zudem durch Fahrstreifen-Leitlinien, durch Fahrstreifen-Begrenzungslinien und/oder Fahrbahnbegrenzungslinien gebildet.

Erfindungsgemäß wird mittels des Steuergeräts der Projektionseinrichtung die Farbe der projizierten Fahrbahnmarkierungen in Abhängigkeit von der erfassten natürlichen Fahrbahnmarkierung, insbesondere in Abhängigkeit von der Art und/oder der Position der erfassten natürlichen Fahrbahnmarkierung relativ zu dem Fahrzeug, selbsttätig bzw. automatisch eingestellt bzw. verstellt. So können bestimmte Fahrbahnmarkierungen deutlicher oder weniger deutlich hervorgehoben werden. Dabei kann dem Fahrer beispielsweise durch farbliche Markierung von Längsmarkierungslinien der Fahrbahn die sicherste zu befahrende Fahrbahnseite mittels der Projektionseinrichtung angezeigt werden. Alternativ könnten die Fahrbahnmarkierungen aber auch mit farblicher Nachahmung der erfassten natürlichen Fahrbahnmarkierung projiziert werden, um die Anzeige möglichst realitätsnah auszubilden.

Weiter bevorzugt ist eine Verkehrssituations-Erfassungseinrichtung vorgesehen, mittels der die aktuelle Verkehrssituation des Fahrzeugs erfasst werden kann. Diese Verkehrssituation-Erfassungseinrichtung ist signaltechnisch mit dem Steuergerät der Projektionseinrichtung verbunden, mittels dem dann die Farbe der projizierten Fahrbahnmarkierungen in Abhängigkeiten von der erfassten Verkehrssituation des Fahrzeugs selbsttätig bzw. automatisch eingestellt bzw. verstellt wird. Sofern dabei beispielsweise mittels der Verkehrssituations-Erfassungseinrichtung ermittelt wird, dass mit dem Fahrzeug ein Überholvorgang möglich ist, kann mittels der Projektionseinrichtung eine Fahrstreifen-Leitlinie der Fahrbahn mit einer ersten Farbe, insbesondere mit der Farbe Grün, projiziert werden. Sofern mittels der Verkehrssituations-Erfassungseinrichtung jedoch erfasst wird, dass kein Überholvorgang möglich ist, kann die Fahrstreifen-Leitlinie mit einer zweiten Farbe, insbesondere mit der Farbe Rot, ins Sichtfeld des Fahrers projiziert werden.

In einer bevorzugten konkreten Ausgestaltung ist die Projektionseinrichtung durch ein Head-up-Display gebildet. Alternativ kann die Projektionseinrichtung auch durch eine, insbesondere ein PHMD (Peripheral Head-Mounted Display) aufweisende, Datenbrille gebildet sein. Weiter alternativ kann mittels der Projektionseinrichtung die wenigstens eine Fahrbahnmarkierung als Projektionsobjekt auf einem vor dem Fahrzeug befindlichen Fahrbahnbereich als Projektionsfläche projiziert werden. Die Fahrbahnmarkierungen können dabei beispielsweise über LED-Leuchtmodule auf die Fahrbahn projiziert werden.

Zur Lösung der bereits genannten Aufgabe wird ferner ein Verfahren zur Unterstützung eines Fahrers eines Fahrzeugs, insbesondere eines Nutzfahrzeugs, beansprucht, wobei eine, insbesondere fahrzeugseitig angeordnete, Fahrbahnmarkierung-Erfassungseinrichtung vorgesehen ist, mittels der zumindest ein Teil von in Fahrtrichtung vor dem Fahrzeug befindlichen Fahrbahnmarkierungen erfasst werden kann, und wobei das Fahrzeug eine Projektionseinrichtung aufweist, mittels der wenigstens eine erfasste Fahrbahnmarkierung als Projektionsobjekt in ein, insbesondere in Fahrtrichtung vorderes, Sichtfeld des Fahrers projiziert werden kann, so dass die vor dem Fahrzeug befindliche Fahrbahnmarkierung mittels des Projektionsobjekts für den Fahrer optisch hervorgehoben ist. Erfindungsgemäß weist das Fahrzeug eine Sicht-Erfassungseinrichtung auf, mittels der die Sichtverhältnisses für den Fahrer des Fahrzeugs erfasst werden. Diese Sicht-Erfassungseinrichtung ist signaltechnisch mit einem Steuergerät der Projektionseinrichtung verbunden, mittels dem die Projektion der wenigstens einen Fahrbahnmarkierung ins Sichtfeld des Fahrers in Abhängigkeit von den mittels der Sicht-Erfassungseinrichtung erfasstem Sichtverhältnissen selbsttätig bzw. automatisch aktiviert, insbesondere selbsttätig aktiviert und deaktiviert, wird. Auch hier erfasst die Sicht-Erfassungseinrichtung die Aktivierung eines Abblendlichts, eines Fernlichts und eines Nebellichts des Fahrzeugs.

Des Weiteren wird auch ein Fahrzeug, insbesondere ein Nutzfahrzeug, mit der erfindungsgemäßen Vorrichtung beansprucht.

Die sich durch die erfindungsgemäße Verfahrensführung und das erfindungsgemäße Fahrzeug ergebenden Vorteile sind identisch mit den bereits gewürdigten Vorteilen der erfindungsgemäßen Vorrichtung, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer perspektivischen Darstellung einen Fahrerplatz eines Fahrzeugs einer erfindungsgemäßen Vorrichtung;
- Figur 2: eine Darstellung, aus der der Aufbau der Vorrichtung hervorgeht;
- Figur 3: eine Darstellung, die die Sicht eines Fahrers des Fahrzeugs bei Nebel und deaktivierter Projektionseinrichtung des Fahrzeugs zeigt;
- Figur 4: eine Darstellung gemäß Figur 3 mit aktivierter Projektionseinrichtung; und
- Figur 5: in einer Darstellung gemäß Figur 2 eine zweite Ausführungsform der erfindungsgemäßen Vorrichtung.

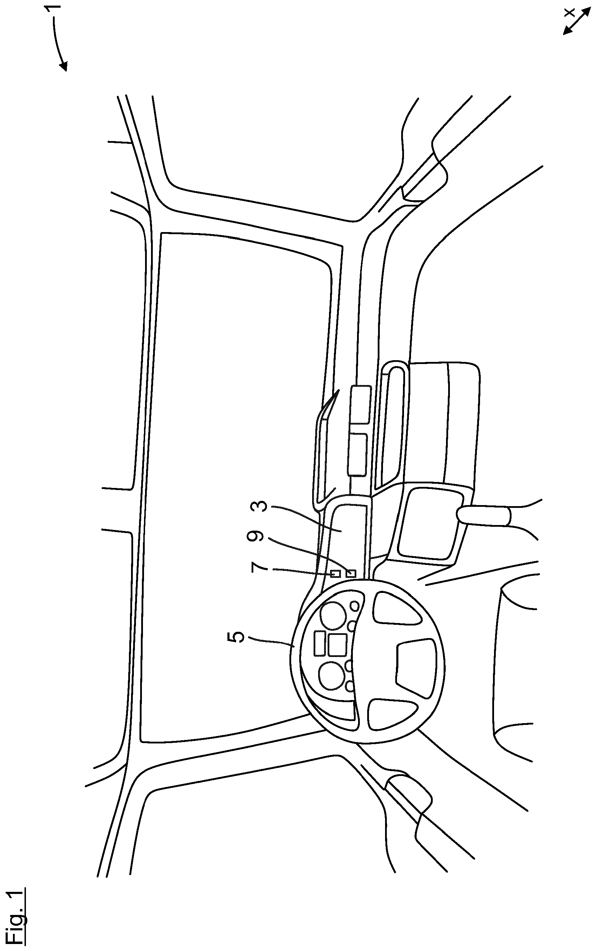

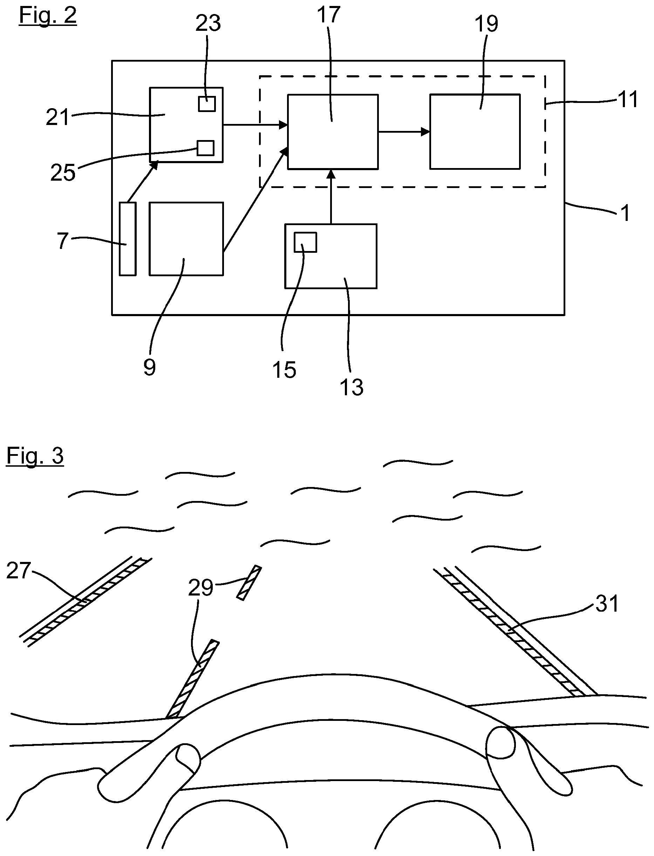

In Figur 1 ist ein Fahrerplatz eines hier beispielhaft als Lastkraftwagen ausgebildeten erfindungsgemäßen Fahrzeugs 1 schematisch gezeigt. An einer Instrumententafel 3 des Fahrzeugs 1 ist dabei im Bereich eines Lenkrads 5 ein Lichtschalter 7 angeordnet, mittels dem hier beispielhaft ein Abblendlicht des Fahrzeugs 1 aktiviert und deaktiviert werden kann. In unmittelbarer Umgebung dieses Lichtschalters 7 ist zudem eine durch einen Fahrer des Fahrzeugs 1 betätigbare Betätigungseinrichtung 9 vorgesehen, durch deren Betätigung eine Projektionseinrichtung 11 (Fig. 2) des Fahrzeugs 1 angesteuert werden kann. Die Betätigungseinrichtung 9 ist hier beispielhaft durch eine druckbetätigbare Taste gebildet. Alternativ könnte die Betätigungseinrichtung 9 beispielsweise aber auch durch einen Drehschalter gebildet sein. Die Funktion der Betätigungseinrichtung 9 wird später noch detaillierter erläutert.

Mittels der Projektionseinrichtung 11 können Projektionsobjekte bzw. Projektionsbilder in das Sichtfeld eines Fahrers des Fahrzeugs 1 eingeblendet werden. Die Projektionseinrichtung 11 ist hier beispielhaft durch ein Head-up-Display gebildet. Alternativ könnte die Projektionseinrichtung beispielsweise auch durch eine Datenbrille oder durch eine Projektionseinrichtung gebildet sein, mittels der die Projektionsobjekte auf einem in Fahrtrichtung x vor dem Fahrzeug 1 befindlichen Fahrbahnbereich als Projektionsfläche projiziert werden können.

Gemäß Figur 2 weist das Fahrzeug 1 auch eine Fahrbahnmarkierung-Erfassungseinrichtung 13 auf, mittels der in Fahrtrichtung x vor dem Fahrzeug 1 befindliche Fahrbahnmarkierungen erfasst werden können. Mittels der Fahrbahnmarkierungs-Erfassungseinrichtung 13 können hier unter anderem Längsmarkierungslinien auf der Fahrbahn des Fahrzeugs 1 erfasst werden. Zur Erfassung der vor dem Fahrzeug befindlichen Fahrbahnmarkierungen weist die Fahrbahnmarkierungs-Erfassungseinrichtung 13 hier eine Sensorik 15 auf. Diese Sensorik 15 umfasst hier beispielhaft eine Kamera, mittels der ein in Fahrtrichtung x vor dem Fahrzeug 1 befindlicher Fahrbahnbereich bildlich bzw. filmisch erfasst werden kann.

Wie aus Figur 2 weiter hervorgeht, ist die Fahrbahnmarkierungs-Erfassungseinrichtung 13 signaltechnisch bzw. datenübertragend mit einem Steuergerät 17 der Projektionseinrichtung 11 verbunden, mittels dem ein Projektor 19 der Projektionseinrichtung 11 gesteuert wird. Der Projektor 19 kann dabei derart von der Steuereinrichtung 17 angesteuert werden, dass die von der Fahrbahnmarkierung-Erfassungseinrichtung 13 erfassten natürlichen bzw. realen Fahrbahnmarkierungen als virtuelle Projektionsobjekte ins Sichtfeld des Fahrers projiziert werden. Auf diese Weise könne die erfassten realen Fahrbahnmarkierungen mittels der Projektionsobjekte für den Fahrer optisch hervorgehoben werden.

Gemäß Figur 2 ist die Taste 9 des Fahrzeugs ebenfalls signaltechnisch mit der Steuereinrichtung 17 der Projektionseinrichtung 11 verbunden, dergestalt, dass mittels der Taste 9 die Projektion der Fahrbahnmarkierungen ins Sichtfeld des Fahrers aktiviert und deaktiviert werden können. Die Taste 9 ist hier dabei allein mit der Funktion zur Aktivierung der Fahrbahnmarkierung-Projektion und mit der Funktion zur Deaktivierung der Fahrbahnmarkierung-Projektion belegt. Sofern die Fahrbahnmarkierungs-Projektion dabei beispielsweise deaktiviert ist, wird die Fahrbahnmarkierungs-Projektion bei einer Betätigung der Taste 9 aktiviert. Sofern die Fahrbahnmarkierungs-Projektion aktiviert ist, wird die Fahrbahnmarkierungs-Projektion bei einer Betätigung der Taste 9 deaktiviert.

Gemäß Figur 2 weist das Fahrzeug 1 weiter auch eine Sicht-Erfassungseinrichtung 21 auf, mittels der die Sichtverhältnisse für den Fahrer des Fahrzeugs 1 erfasst werden können. Die Sicht-Erfassungseinrichtung 21 ist hier dabei signaltechnisch mit dem Lichtschalter 7 (Fig. 1) des Fahrzeugs 1 verbunden, so dass mittels der Sicht-Erfassungseinrichtung 21 die Aktivierung des Abblendlichts erfasst werden kann. Die Aktivierung des Abblendlichts wird von der Sicht-Erfassungseinrichtung als Indiz für schlechte Sichtbedingungen für den Fahrer des Fahrzeugs 1 gewertet. Weiter weist die Sicht-Erfassungseinrichtung 21 hier beispielhaft auch einen Regensensor 23 und einen Lichtsensor 25 zur Erfassung der Lichtverhältnisse in der Fahrzeugumgebung auf. Die Messdaten der Sensoren 23, 25 werden ebenfalls zur Auswertung der Sichtverhältnisse für den Fahrer des Fahrzeugs 1 herangezogen.

Wie in Fig. 2 weiter gezeigt ist, ist die Sicht-Erfassungseinrichtung 21 signaltechnisch mit dem Steuergerät 17 der Projektionseinrichtung 11 verbunden, so dass die mittels der Sicht-Erfassungseinrichtung 21 ermittelten Informationen zu den aktuellen Sichtverhältnissen für den Fahrer des Fahrzeugs 1 an das Steuergerät 17 übermittelt werden. In Abhängigkeit von diesen Informationen bzw. von den erfassten Sichtverhältnissen für den Fahrer wird dann die Projektion der Fahrbahnmarkierungen ins Sichtfeld des Fahrers selbsttätig bzw. automatisch mit dem Steuergerät 17 aktiviert und deaktiviert. Konkret wird dabei für den Fall, dass mit der Sicht-Erfassungseinrichtung 21 schlechte Sichtverhältnisse für den Fahrer erfasst werden, die Fahrbahnmarkierungs-Projektion aktiviert. Sofern gute Sichtbedingungen für den Fahrer erfasst werden, wird die Fahrbahnmarkierungs-Projektion deaktiviert.

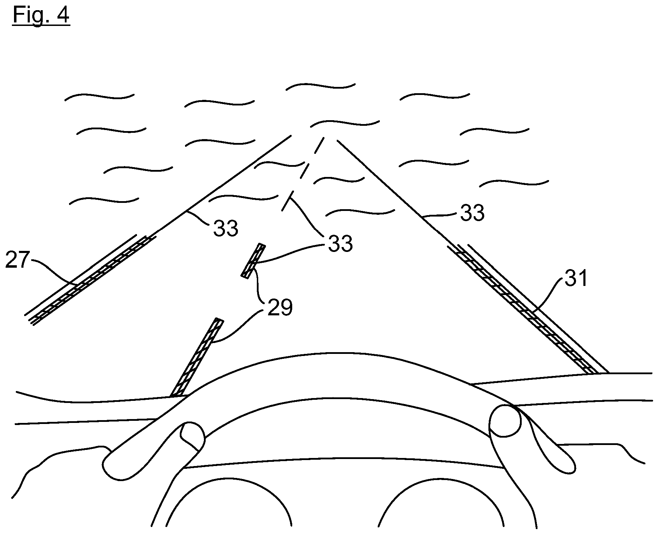

Zur Verdeutlichung der Funktionsweise der Projektionseinrichtung 11 ist in den Figuren 3 und 4 jeweils eine Fahrsituation gezeigt, in der die Sicht des Fahrers durch starken Nebel behindert wird. In Figur 3 ist die Projektion der Fahrbahnmarkierungen ins Sichtfeld des Fahrers dabei deaktiviert, während in Figur 4 die Projektion der Fahrbahnmarkierungen ins Sichtfeld des Fahrers aktiviert ist. Durch den starken Nebel sind die vor dem Fahrzeug 1 befindlichen natürlichen Fahrbahnmarkierungen, hier eine Fahrbahnbegrenzungslinie 27, eine Fahrstreifen-Leitlinie 29 und eine Fahrstreifen-Begrenzungslinie 31 nur unmittelbar vor dem Fahrzeug 1 erkennbar. Bei aktivierter Fahrbahnmarkierungs-Projektion gemäß Fig. 4 werden die natürliche Fahrbahnbegrenzungslinie 27, die Fahrbahn-Leitlinie 29 und die Fahrstreckenbegrenzungslinie 31 als Projektionsobjekte 33 ins Sichtfeld des Fahrers projiziert. Dadurch werden die vor dem Fahrzeug befindlichen Fahrbahnmarkierungen 27, 29, 31 mittels der Projektionsobjekte 33 für den Fahrer optisch hervorgehoben, so dass der Fahrer auch den Verlauf der vom Nebel verdeckten Bereiche der Fahrbahnmarkierungen 27, 29, 31 erkennen und somit den Fahrbahnverlauf besser einschätzen kann.

Die eingeblendeten virtuellen Längsmarkierungslinien 33 weisen hier beispielhaft eine geringere Breite auf als die realen Längsmarkierungslinien 27, 29, 31. Alternativ könnten die virtuellen Längsmarkierungslinien 33 aber auch mit denselben äußeren Abmessungen wie die realen Längsmarkierungslinien 27, 29, 31 projiziert werden.

Zudem können die eingeblendeten virtuellen Fahrbahnmarkierungen bzw. Projektionsobjekte 33 beispielsweise mit derselben Farbe wie die natürlichen Fahrbahnmarkierungen eingeblendet werden, um die projizierten Fahrbahnmarkierungen möglichst realitätsnah darzustellen. Alternativ könnte bei der in Figur 4 gezeigten Verkehrssituation aber auch die Fahrbahnbegrenzungslinie 27 mit der Farbe Rot, die Fahrbahn-Leitlinie 29 mit der Farbe Orange bzw. Gelb und die Fahrstreifen-Begrenzungslinie 31 mit der Farbe Grün dargestellt werden, um dem Fahrer die sicherste zu befahrende Fahrbahnseite anzuzeigen.

Optional kann auch eine Verkehrssituation-Erfassungseinrichtung vorgesehen sein, mittels der die aktuelle Verkehrssituation des Fahrzeugs 1 erfasst werden kann. Diese Verkehrssituation-Erfassungseinrichtung ist dann ebenfalls signaltechnisch mit dem Steuergerät 17 der Projektionseinrichtung 11 verbunden. Mittels des Steuergeräts 17 wird dann die Farbe der projizierten Fahrbahnmarkierung in Abhängigkeit von der erfassten Verkehrssituation des Fahrzeugs selbsttätig bzw. automatisch eingestellt.

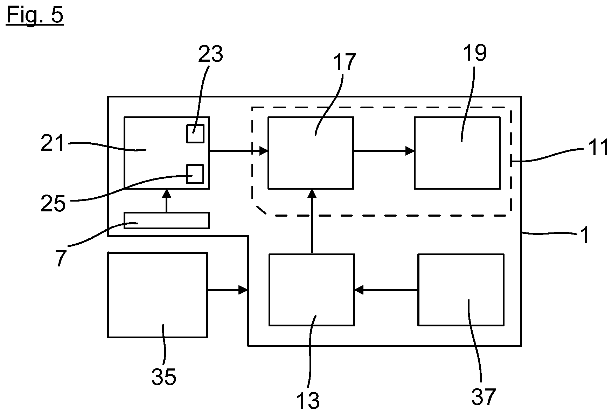

In Figur 5 ist eine zweite Ausführungsform der erfindungsgemäßen Vorrichtung gezeigt. Im Vergleich zu der in Figur 2 gezeigten ersten Ausführungsform weist das Fahrzeug 1 hier ein Navigationssystem 37 auf, mittels dem das Fahrzeug 1 entlang einer definierten bzw. eingestellten Fahrroute geführt wird. Zudem ist die Fahrbahnmarkierung-Erfassungseinrichtung 13 hier datenübertragend mit einer fahrzeugexternen Informationseinrichtung 35 verbunden, die über Information zu auf der Fahrroute des Fahrzeugs 1 befindlichen Fahrbahnmarkierungen verfügt. Diese fahrzeugexterne Informationseinrichtung 35 ist hier beispielhaft durch einen Cloud-Server gebildet, in dem Information zu auf der Fahrroute des Fahrzeugs 1 befindlichen Fahrbahnmarkierungen gespeichert sind. Alternativ könnte die fahrzeugexterne Informationseinrichtung 35 beispielsweise auch durch ein vorausfahrendes Fahrzeug gebildet sein, das auf der Fahrroute des Fahrzeugs 1 befindlichen Fahrbahnmarkierungen erfasst und über Car-to-Car-Kommunikation mit dem Fahrzeug 1 kommuniziert.

Mit den von dem Cloud-Speicher 35 an das Fahrzeug 1 übermittelten Informationen zu den auf der Fahrroute des Fahrzeugs 1 befindlichen Fahrbahnmarkierungen und der mittels des Navigationssystems 37 ermittelten aktuellen Position des Fahrzeugs 1 auf seiner Fahrroute können hier dann ebenfalls vor dem Fahrzeug 1 befindliche Fahrbahnmarkierungen mittels Fahrbahnmarkierung-Erfassungseinrichtung 13 erfasst werden. Zur Ermittlung der vor dem Fahrzeug 1 befindlichen Fahrbahnmarkierungen können hier zudem auch Kartendaten des Navigationssystems 37 verwendet werden.

### Bezugszeichenliste

- 1: Fahrzeug
- 3: Instrumententafel
- 5: Lenkrad
- 7: Lichtschalter
- 9: Betätigungseinrichtung
- 11: Projektionseinrichtung
- 13: Fahrbahnmarkierung-Erfassungseinrichtung
- 15: Sensorik
- 17: Steuergerät
- 19: Projektor
- 21: Sicht-Erfassungseinrichtung
- 23: Regensensor
- 25: Lichtsensor
- 27: Fahrbahnbegrenzungslinie
- 29: Fahrbahn-Leitlinie
- 31: Fahrstreckenbegrenzungslinie
- 33: Projektionsobjekt
- 35: fahrzeugexterne Informationseinrichtung
- 37: Navigationssystem

## Patentansprüche

1. Vorrichtung zur Unterstützung eines Fahrers eines Fahrzeugs, wobei eine fahrzeugseitige Fahrbahnmarkierung-Erfassungseinrichtung (13) vorgesehen ist, mittels der eine in Fahrtrichtung (x) vor dem Fahrzeug (1) befindliche Fahrbahnmarkierung (27, 29, 31) erfassbar ist, und wobei das Fahrzeug (1) eine Projektionseinrichtung (11) aufweist, mittels der die erfasste Fahrbahnmarkierung (27, 29, 31) als Projektionsobjekt (33) in ein Sichtfeld des Fahrers projizierbar ist, wobei das Fahrzeug (1) eine Sicht-Erfassungseinrichtung (21) aufweist, mittels der die Sichtverhältnisse für den Fahrer des Fahrzeugs (1) erfassbar sind, und wobei mittels eines signaltechnisch mit der Sicht-Erfassungseinrichtung (21) verbundenen Steuergeräts (17) der Projektionseinrichtung (11) die Projektion der erfassten Fahrbahnmarkierung (27, 29, 31) ins Sichtfeld des Fahrers in Abhängigkeit von den mittels der Sicht-Erfassungseinrichtung (21) erfassten Sichtverhältnissen selbsttätig aktivierbar ist,
**dadurch gekennzeichnet,**
**dass** mittels des Steuergeräts (17) der Projektionseinrichtung (11) die Farbe der projizierten Fahrbahnmarkierung (27, 29, 31) in Abhängigkeit von der erfassten Fahrbahnmarkierung, und zwar in Abhängigkeit von der Art und/oder der Position der erfassten Fahrbahnmarkierung relativ zu dem Fahrzeug, selbsttätig einstellbar ist, und
**dass** mittels der Sicht-Erfassungseinrichtung (21) die Aktivierung eines Abblendlichts, eines Fernlichts und eines Nebellichts des Fahrzeugs (1) erfassbar ist.

2. Vorrichtung nach Anspruch 1, **dadurch gekennzeichnet, dass** die Sicht-Erfassungseinrichtung (21) einen Regensensor (23) aufweist, und/oder dass die Sicht-Erfassungseinrichtung (21) einen Lichtsensor (25) zur Erfassung der Lichtverhältnisse in der Fahrzeugumgebung aufweist.

3. Vorrichtung nach Anspruch 1 oder 2, **dadurch gekennzeichnet, dass** zusätzlich eine durch den Fahrer manuell betätigbare Betätigungseinrichtung (9) vorgesehen ist, durch deren Betätigung die Projektion der erfassten Fahrbahnmarkierung (27, 29, 31) ins Sichtfeld des Fahrers aktivierbar ist.

4. Vorrichtung nach Anspruch 3, **dadurch gekennzeichnet, dass** die Betätigungseinrichtung (9) nur mit einer Funktion zur Aktivierung der Fahrbahnmarkierungs-Projektion und mit einer Funktion zur Deaktivierung der Fahrbahnmarkierungs-Projektion belegt ist, und/oder dass die Betätigungseinrichtung (9) in unmittelbarer Umgebung eines Lichtschalters (7) des Fahrzeugs (1) zur Aktivierung wenigstens des Abblendlichts, des Fernlichts und des Nebellichts des Fahrzeugs (1) an dem Fahrzeug (1) angeordnet ist.

5. Vorrichtung nach einem der vorhergehenden Ansprüche, **dadurch gekennzeichnet, dass** die Fahrbahnmarkierung-Erfassungseinrichtung (13) eine Sensorik aufweist, mittels der die Art der vor dem Fahrzeug (1) befindlichen, erfassten Fahrbahnmarkierung (27, 29, 31) und/oder die Position der vor dem Fahrzeug (1) befindlichen, erfassten Fahrbahnmarkierung (27, 29, 31) relativ zu dem Fahrzeug (1) ermittelbar ist.

6. Vorrichtung nach einem der vorhergehenden Ansprüche, **dadurch gekennzeichnet, dass** wenigstens eine datenübertragend mit der fahrzeugseitigen Fahrbahnmarkierung-Erfassungseinrichtung (13) verbundene Informationseinrichtung (35, 37) über Informationen zu auf der Fahrstrecke des Fahrzeugs (1) befindlichen Fahrbahnmarkierungen (27, 29, 31) verfügt, dass eine datenübertragend mit der Fahrbahnmarkierung-Erfassungseinrichtung (13) verbundene Positionsbestimmungseinrichtung (37) vorgesehen ist, mittels der die aktuelle Position des Fahrzeugs (1) auf seiner Fahrstrecke ermittelbar ist, und dass mittels der Fahrbahnmarkierung-Erfassungseinrichtung (13) aus den Informationen der Informationseinrichtung (35, 37) und der ermittelten aktuellen Position des Fahrzeugs (1) die Art der Fahrbahnmarkierung (27, 29, 31) und/oder die Position der Fahrbahnmarkierung (27, 29, 31) relativ zu dem Fahrzeug (1) ermittelbar ist.

7. Vorrichtung nach Anspruch 6, **dadurch gekennzeichnet, dass** die Informationseinrichtung durch eine fahrzeugseitige Speichereinrichtung (37) gebildet ist, in der Informationen zu auf der Fahrstrecke des Fahrzeugs (1) befindlichen Fahrbahnmarkierungen gespeichert sind, wobei vorgesehen ist, dass die Informationen zu auf der Fahrstrecke des Fahrzeugs (1) befindlichen Fahrbahnmarkierungen mittels der Fahrbahnmarkierung-Erfassungseinrichtung (13) aus Kartendaten eines fahrzeugseitigen Navigationssystems (37) als Speichereinrichtung auslesbar und/oder ermittelbar sind.

8. Vorrichtung nach Anspruch 6 oder 7, **dadurch gekennzeichnet, dass** die Informationseinrichtung durch eine fahrzeugexterne Speichereinrichtung (35) gebildet ist, in der Informationen zu auf der Fahrstrecke des Fahrzeugs (1) befindlichen Fahrbahnmarkierungen gespeichert sind, und/oder dass die Informationseinrichtung durch ein vorausfahrendes Fahrzeug gebildet ist.

9. Vorrichtung nach einem der vorhergehenden Ansprüche, **dadurch gekennzeichnet, dass** die erfassbaren und projizierbaren Fahrbahnmarkierung zumindest durch Längsmarkierungslinien (27, 29, 31) gebildet sind, wobei vorgesehen ist, dass die erfassbaren und projizierbaren Längsmarkierungslinien durch Fahrstreifen-Leitlinien (29) und/oder durch eine Fahrstreifenbegrenzungslinien (31) und/oder durch eine Fahrbahnbegrenzungslinien (27) gebildet sind.

10. Vorrichtung nach einem der vorhergehenden Ansprüche, **dadurch gekennzeichnet, dass** eine Verkehrssituations-Erfassungseinrichtung vorgesehen ist, mittels der die aktuelle Verkehrssituation des Fahrzeugs (1) erfassbar ist, und dass die Verkehrssituations-Erfassungseinrichtung signaltechnisch mit dem Steuergerät (17) der Projektionseinrichtung (11) verbunden ist, mittels dem die Farbe der projizierten Fahrbahnmarkierung (27, 29, 31) in Abhängigkeit von der erfassten aktuellen Verkehrssituation des Fahrzeugs (1) selbsttätig einstellbar ist.

11. Vorrichtung einem der vorhergehenden Ansprüche, **dadurch gekennzeichnet, dass** die Projektionseinrichtung (11) durch ein Head-up-Display gebildet ist, oder dass die Projektionseinrichtung (11) durch eine Datenbrille gebildet ist, oder dass mittels der Projektionseinrichtung (11) die Fahrbahnmarkierung (27, 29, 31) als Projektionsobjekt (33) auf einem vor dem Fahrzeug (1) befindlichen Fahrbahnbereich als Projektionsfläche projizierbar ist.

12. Verfahren zur Unterstützung eines Fahrers eines Fahrzeugs, wobei eine fahrzeugseitige Fahrbahnmarkierung-Erfassungseinrichtung (13) vorgesehen ist, mittels der eine in Fahrtrichtung (x) vor dem Fahrzeug (1) befindliche Fahrbahnmarkierung (27, 29, 31) erfasst wird, und wobei das Fahrzeug eine Projektionseinrichtung (11) aufweist, mittels der die erfasste Fahrbahnmarkierung (27, 29, 31) als Projektionsobjekt (33) in ein Sichtfeld des Fahrers projiziert wird, so dass die vor dem Fahrzeug (1) befindliche Fahrbahnmarkierung (27, 29, 31) mittels des Projektionsobjekts (33) für den Fahrer optisch hervorgehoben ist, wobei das Fahrzeug (1) eine Sicht-Erfassungseinrichtung (21) aufweist, mittels der die Sichtverhältnisse für den Fahrer des Fahrzeugs (1) erfasst werden, und wobei mittels eines signaltechnisch mit der Sicht-Ermittlungseinrichtung (21) verbundenen Steuergeräts (17) der Projektionseinrichtung (11) die Projektion der Fahrbahnmarkierung (27, 29, 31) ins Sichtfeld des Fahrers in Abhängigkeit von den mittels der Sicht-Erfassungseinrichtung (21) erfassten Sichtverhältnissen selbsttätig aktiviert wird,
**dadurch gekennzeichnet,**
**dass** mittels des Steuergeräts (17) der Projektionseinrichtung (11) die Farbe der projizierten Fahrbahnmarkierung (27, 29, 31) in Abhängigkeit von der erfassten Fahrbahnmarkierung, und zwar in Abhängigkeit von der Art und/oder der Position der erfassten Fahrbahnmarkierung relativ zu dem Fahrzeug, selbsttätig eingestellt wird, und
**dass** mittels der Sicht-Erfassungseinrichtung (21) die Aktivierung eines Abblendlichts, eines Fernlichts und eines Nebellichts des Fahrzeugs (1) erfassbar ist.

13. Fahrzeug mit einer Vorrichtung nach einem der Ansprüche 1 bis 11.

## Claims

1. Device for assisting a driver of a vehicle, wherein provision is made for a vehicle-side road marking detection unit (13) by way of which it is possible to detect a road marking (27, 29, 31) located ahead of the vehicle (1) in a direction of travel (x), and wherein the vehicle (1) has a projection unit (11) by way of which the detected road marking (27, 29, 31) is able to be projected into a field of view of the driver as a projection object (33), wherein the vehicle (1) has a view detection unit (21) by way of which the viewing conditions for the driver of the vehicle (1) are able to be detected, and wherein a controller (17) of the projection unit (11), which controller is signal-connected to the view detection unit (21), is able to be used to automatically activate the projection of the detected road marking (27, 29, 31) into the field of view of the driver on the basis of the viewing conditions detected by way of the view detection unit (21),
**characterized**
**in that** the controller (17) of the projection unit (11) is able to be used to automatically set the colour of the projected road marking (27, 29, 31) on the basis of the detected road marking, specifically on the basis of the type and/or position of the detected road marking relative to the vehicle, and
**in that** the activation of a low beam, a high beam and a fog light of the vehicle (1) is able to be detected by way of the view detection unit (21).

2. Device according to Claim 1, **characterized in that** the view detection unit (21) has a rain sensor (23), and/or **in that** the view detection unit (21) has a light sensor (25) for detecting the lighting conditions in the vehicle surroundings.

3. Device according to Claim 1 or 2, **characterized in that** provision is additionally made for an actuation unit (9) able to be actuated manually by the driver and the actuation of which makes it possible to activate the projection of the detected road marking (27, 29, 31) into the field of view of the driver.

4. Device according to Claim 3, **characterized in that** the actuation unit (9) is given only a function for activating the road marking projection and a function for deactivating the road marking projection, and/or **in that** the actuation unit (9) is arranged in the immediate vicinity of a light switch (7) of the vehicle (1) for activating at least the low beam, the high beam and the fog light of the vehicle (1) on the vehicle (1).

5. Device according to one of the preceding claims, **characterized in that** the road marking detection unit (13) has a sensor system by way of which it is possible to ascertain the type of detected road marking (27, 29, 31) located ahead of the vehicle (1) and/or the position of the detected road marking (27, 29, 31) located ahead of the vehicle (1) relative to the vehicle (1).

6. Device according to one of the preceding claims, **characterized in that** at least one information unit (35, 37) with a data-transmitting connection to the vehicle-side road marking detection unit (13) possesses information about road markings (27, 29, 31) located on the route of the vehicle (1), **in that** provision is made for a position determination unit (37) with a data-transmitting connection to the road marking detection unit (13), by way of which position determination unit it is possible to ascertain the current position of the vehicle (1) on its route, and **in that** the type of road marking (27, 39, 31) and/or the position of the road marking (27, 29, 31) relative to the vehicle (1) is able to be ascertained by way of the road marking detection unit (13) from the information of the information unit (35, 37) and the ascertained current position of the vehicle (1).

7. Device according to Claim 6, **characterized in that** the information unit is formed by a vehicle-side storage unit (37) storing information about road markings located on the route of the vehicle (1), wherein provision is made for the information about road markings located on the route of the vehicle (1) to be able to be read out and/or ascertained by way of the road marking detection unit (13) from map data from a vehicle-side navigation system (37) as storage unit.

8. Device according to Claim 6 or 7, **characterized in that** the information unit is formed by a storage unit (35) outside the vehicle, which storage unit stores information about road markings located on the route of the vehicle (1), and/or **in that** the information unit is formed by a vehicle ahead.

9. Device according to one of the preceding claims, **characterized in that** the detectable and projectable road marking is formed at least by longitudinal marking lines (27, 29, 31), wherein provision is made for the detectable and projectable longitudinal marking lines to be formed by lane guidance lines (29) and/or by lane boundary lines (31) and/or by road boundary lines (27).

10. Device according to one of the preceding claims, **characterized in that** provision is made for a traffic situation detection unit by way of which it is possible to detect the current traffic situation of the vehicle (1), and **in that** the traffic situation detection unit is signal-connected to the controller (17) of the projection unit (11), by way of which controller it is possible to automatically set the colour of the projected road marking (27, 29, 31) on the basis of the detected current traffic situation of the vehicle (1).

11. Device according to one of the preceding claims, **characterized in that** the projection unit (11) is formed by a head-up display, or **in that** the projection unit (11) is formed by data glasses, or **in that** the projection unit (11) is able to be used to project the road marking (27, 29, 31) as a projection object (33) on an area of the road located ahead of the vehicle (1) as projection surface.

12. Method for assisting a driver of a vehicle, wherein provision is made for a vehicle-side road marking detection unit (13) by way of which a road marking (27, 29, 31) located ahead of the vehicle (1) in a direction of travel (x) is detected, and wherein the vehicle has a projection unit (11) by way of which the detected road marking (27, 29, 31) is projected into a field of view of the driver as a projection object (33), such that the road marking (27, 29, 31) located ahead of the vehicle (1) is visually highlighted to the driver by way of the projection object (33), wherein the vehicle (1) has a view detection unit (21) by way of which the viewing conditions for the driver of the vehicle (1) are detected, and wherein a controller (17) of the projection unit (11), which controller is signal-connected to the view detection unit (21), is used to automatically activate the projection of the road marking (27, 29, 31) into the field of view of the driver on the basis of the viewing conditions detected by way of the view detection unit (21),
**characterized**
**in that** the controller (17) of the projection unit (11) is used to automatically set the colour of the projected road marking (27, 29, 31) on the basis of the detected road marking, specifically on the basis of the type and/or position of the detected road marking relative to the vehicle, and
**in that** the activation of a low beam, a high beam and a fog light of the vehicle (1) is able to be detected by way of the view detection unit (21).

13. Vehicle having a device according to one of Claims 1 to 11.

## Revendications

1. Dispositif d'aide à la conduite d'un véhicule, dans lequel il est prévu un équipement de détection de marquage routier (13) côté véhicule au moyen duquel un marquage routier (27, 29, 31) se trouvant à l'avant du véhicule (1) dans le sens de la marche (x) peut être détecté, et dans lequel le véhicule (1) comporte un équipement de projection (11) au moyen duquel le marquage routier (27, 29, 31) détecté peut être projeté en tant qu'objet de projection (33) dans un champ de vision du conducteur, dans lequel le véhicule (1) comporte un équipement de détection de vision (21) au moyen duquel les conditions de visibilité pour le conducteur du véhicule (1) peuvent être détectées, et dans lequel la projection du marquage routier (27, 29, 31) détecté dans le champ de vision du conducteur peut être activée automatiquement au moyen d'un appareil de commande (17) de l'équipement de projection (11) relié par une technique de signalisation à l'équipement de détection de vision (21), en fonction des conditions de visibilité détectées au moyen de l'équipement de détection de vision (21),
**caractérisé en ce qu'**au moyen de l'appareil de commande (17) de l'équipement de projection (11), la couleur du marquage routier (27, 29, 31) projeté peut être réglée automatiquement en fonction du marquage routier détecté, et plus précisément en fonction du type et/ou de la position du marquage routier détecté par rapport au véhicule, et
**en ce qu'**au moyen de l'équipement de détection de vision (21), l'activation d'un feu de croisement, d'un feu de route et d'un feu de brouillard du véhicule (1) peut être détectée.

2. Dispositif selon la revendication 1, **caractérisé en ce que** l'équipement de détection de vision (21) comporte un capteur de pluie (23), et/ou **en ce que** l'équipement de détection de vision (21) comporte un capteur de lumière (25) pour détecter les conditions de luminosité dans l'environnement du véhicule.

3. Dispositif selon la revendication 1 ou 2, **caractérisé en ce qu'**il est en outre prévu un équipement d'actionnement (9) pouvant être actionné manuellement par le conducteur, dont l'actionnement permet d'activer la projection du marquage routier (27, 29, 31) détecté dans le champ de vision du conducteur.

4. Dispositif selon la revendication 3, **caractérisé en ce que** l'équipement d'actionnement (9) est occupé uniquement par une fonction d'activation de la projection du marquage routier et par une fonction de désactivation de la projection du marquage routier, et/ou **en ce que** l'équipement d'actionnement (9) est disposé sur le véhicule (1) à proximité immédiate d'un commutateur de feux (7) du véhicule (1) pour activer au moins les feux de croisement, les feux de route et les feux de brouillard du véhicule (1).

5. Dispositif selon l'une des revendications précédentes, **caractérisé en ce que** l'équipement de détection de marquage routier (13) comporte un système de capteurs au moyen duquel le type de marquage routier (27, 29, 31) détecté se trouvant devant le véhicule (1) et/ou la position du marquage routier (27, 29, 31) détecté se trouvant devant le véhicule (1) par rapport au véhicule (1) peuvent être déterminés.

6. Dispositif selon l'une des revendications précédentes, **caractérisé en ce qu'**au moins un équipement d'information (35, 37) relié par transmission de données à l'équipement de détection de marquage routier (13) côté véhicule dispose d'informations concernant des marquages routiers (27, 29, 31) se trouvant sur le trajet du véhicule (1), **en ce qu'**il est prévu un équipement de détermination de position (37) relié par transmission de données à l'équipement de détection de marquage routier (13), au moyen duquel la position actuelle du véhicule (1) sur son trajet peut être déterminée, et **en ce qu'**au moyen de l'équipement de détection de marquage routier (13), le type de marquage routier (27, 29, 31) et/ou la position du marquage routier (27, 29, 31) par rapport au véhicule (1) peuvent être déterminés à partir des informations de l'équipement d'information (35, 37) et de la position actuelle déterminée du véhicule (1).

7. Dispositif selon la revendication 6, **caractérisé en ce que** l'équipement d'information est constitué par un équipement de mémoire (37) côté véhicule, dans lequel sont mémorisées des informations concernant des marquages routiers se trouvant sur le trajet du véhicule (1), dans lequel il est fait en sorte que les informations concernant des marquages routiers se trouvant sur le trajet du véhicule (1) peuvent être lues et/ou déterminées au moyen de l'équipement de détection de marquage routier (13) à partir de données cartographiques d'un système de navigation (37) côté véhicule et servant d'équipement de mémoire.

8. Dispositif selon la revendication 6 ou 7, **caractérisé en ce que** l'équipement d'information est constitué par un équipement de mémoire (35) externe au véhicule dans lequel sont mémorisées des informations relatives à des marquages routiers se trouvant sur le trajet du véhicule (1), et/ou **en ce que** l'équipement d'information est constitué par un véhicule circulant à l'avant.

9. Dispositif selon l'une des revendications précédentes, **caractérisé en ce que** les marquages routiers pouvant être détectés et projetés sont constitués au moins par des lignes de marquage longitudinales (27, 29, 31), dans lequel il est fait en sorte que les lignes de marquage longitudinales pouvant être détectées et projetées sont constituées par des lignes directrices de voies de circulation (29) et/ou par une ligne de séparation de voies de circulation (31) et/ou par une ligne de délimitation de voies de circulation (27).

10. Dispositif selon l'une des revendications précédentes, **caractérisé en ce qu'**il est prévu un équipement de détection des conditions de circulation au moyen duquel les conditions de circulation actuelles du véhicule (1) peuvent être détectées, et **en ce que** l'équipement de détection des conditions de circulation est relié par une technique de signalisation à l'appareil de commande (17) de l'équipement de projection (11), au moyen duquel la couleur du marquage routier (27, 29, 31) projeté peut être réglée automatiquement en fonction des conditions de circulation actuelles détectées du véhicule (1).

11. Dispositif selon l'une des revendications précédentes, **caractérisé en ce que** l'équipement de projection (11) est constitué par un affichage tête haute, ou **en ce que** l'équipement de projection (11) est constitué par des lunettes de données, ou **en ce qu'**au moyen de l'équipement de projection (11), le marquage routier (27, 29, 31) peut être projeté en tant qu'objet de projection (33) sur une zone de la chaussée se trouvant à l'avant le véhicule (1) en tant que surface de projection.

12. Procédé d'aide à la conduite d'un véhicule, dans lequel il est prévu un équipement de détection de marquage routier (13) côté véhicule au moyen duquel un marquage routier (27, 29, 31) se trouvant à l'avant du véhicule (1) dans le sens de la marche (x) est détecté, et dans lequel le véhicule comporte un équipement de projection (11) au moyen duquel le marquage routier (27, 29, 31) détecté est projeté en tant qu'objet de projection (33) dans un champ de vision du conducteur, de sorte que le marquage routier (27, 29, 31) se trouvant à l'avant du véhicule (1) est optiquement mis en évidence pour le conducteur au moyen de l'objet de projection (33), dans lequel le véhicule (1) comporte un équipement de détection de vision (21) au moyen duquel les conditions de visibilité pour le conducteur du véhicule (1) sont détectées, et dans lequel la projection du marquage routier (27, 29, 31) dans le champ de vision du conducteur est activée automatiquement au moyen d'un appareil de commande (17) de l'équipement de projection (11) relié par une technique de signalisation à l'équipement de détection de vision (21), en fonction des conditions de visibilité détectées au moyen de l'équipement de détection de vision (21),
**caractérisé en ce qu'**au moyen de l'appareil de commande (17) de l'équipement de projection (11), la couleur du marquage routier (27, 29, 31) projeté est réglée automatiquement en fonction du marquage routier détecté, et plus précisément en fonction du type et/ou de la position du marquage routier détecté par rapport au véhicule, et
**en ce qu'**au moyen de l'équipement de détection de vision (21), l'activation d'un feu de croisement, d'un feu de route et d'un feu de brouillard du véhicule (1) peut être détectée.

13. Véhicule comportant un dispositif selon l'une des revendications 1 à 11.
